# EUROPÄISCHE PATENTANMELDUNG

(11) **EP 3 567 689 A1**
(43) Veröffentlichungstag der Anmeldung: **13.11.2019**
(21) Anmeldenummer: 18171447.8
(22) Anmeldetag: 09.05.2018
(51) Int. Cl.: H02H 3/33, H02H 3/347, H02H 7/12, H02H 7/122, H02H 7/125

(54) **FEHLERSTROM-SCHUTZSCHALTUNG MIT BEGRENZUNG DES EINGANGSSIGNALS**

(71) Anmelder: Siemens Aktiengesellschaft, 80333 München (DE)
(72) Erfinder: Herrmann, Bernd, 91074 Herzogenaurach (DE); Schierling, Hubert, 91052 Erlangen (DE); Weis, Benno, 91334 Hemhofen (DE)

(57) **Zusammenfassung**

Eine Sensoreinrichtung (9) erfasst ein Messsignal (M), das mit der Summe der Ströme (11, 12, 13) korrespondiert, die durch Leitungen (2) fließen, über welche ein Umrichter (1) mit einem Versorgungsnetz (3) verbunden ist. Eine Begrenzungseinrichtung (10) ermittelt anhand des Messsignals (M) ein modifiziertes Messsignal (M') und führt es einer Auslöseeinrichtung (11) zu. Die Auslöseeinrichtung (11) öffnet in den Leitungen (2) angeordnete Schalter (12) und trennt so den Umrichter (1) vom Versorgungsnetz (3), wenn und sobald der Betrag des modifizierten Messsignals (M') während eines durch die Auslegung der Auslöseeinrichtung (11) vorbestimmten Zeitfensters (13) im Mittel einen Auslösegrenzwert (MA) übersteigt. Anderenfalls hält sie die Schalter (12) geschlossen. Die Begrenzungseinrichtung (10) ermittelt das modifizierte Messsignal (M') derart, dass es mit dem Messsignal (M) oder dessen Betrag übereinstimmt, wenn und solange der Betrag des Messsignals (M) unterhalb eines vorbestimmten Maximalwerts (MAX) liegt. Anderenfalls begrenzt sie den Betrag des modifizierten Messsignals (M') auf den Maximalwert (MAX). Alternativ oder zusätzlich ermittelt sie das modifizierte Messsignal (M') derart, dass dessen Änderungsgeschwindigkeit (δM') mit einer Änderungsgeschwindigkeit (δM) des Messsignals (M) übereinstimmt, wenn und solange der Betrag der Änderungsgeschwindigkeit (δM) des Messsignals (M) unterhalb eines vorbestimmten Änderungsgrenzwertes (δMAX) liegt. Anderenfalls begrenzt sie den Betrag der Änderungsgeschwindigkeit (δM') des modifizierten Messsignals (M') auf den Änderungsgrenzwert (δMAX).

## Beschreibung

Die vorliegende Erfindung geht aus von einem Betriebsverfahren für eine Fehlerstrom-Schutzschaltung,
- wobei die Fehlerstrom-Schutzschaltung mittels einer Sensoreinrichtung ein Messsignal erfasst, das mit der Summe der Ströme korrespondiert, die durch Leitungen fließen, über welche ein der Fehlerstrom-Schutzschaltung nachgeordneter Umrichter mit einem Versorgungsnetz verbunden ist,
- wobei die Fehlerstrom-Schutzschaltung anhand des Messsignals ein modifiziertes Messsignal ermittelt und das modifizierte Messsignal einer Auslöseeinrichtung der Fehlerstrom-Schutzschaltung zuführt,
- wobei die Auslöseeinrichtung in den Leitungen angeordnete Schalter öffnet und so den Umrichter vom Versorgungsnetz trennt, wenn und sobald der Betrag des modifizierten Messsignals während eines durch die Auslegung der Auslöseeinrichtung vorbestimmten Zeitfensters im Mittel einen Auslösegrenzwert übersteigt, und anderenfalls die Schalter geschlossen hält.

Die vorliegende Erfindung geht weiterhin aus von einer Fehlerstrom-Schutzschaltung,
- wobei die Fehlerstrom-Schutzschaltung eine Sensoreinrichtung aufweist, mittels derer die Fehlerstrom-Schutzschaltung ein Messsignal erfasst, das mit der Summe der Ströme korrespondiert, die durch Leitungen fließen, über welche ein der Fehlerstrom-Schutzschaltung nachgeordneter Umrichter mit einem Versorgungsnetz verbunden ist,
- wobei die Fehlerstrom-Schutzschaltung eine Auslöseeinrichtung aufweist, der ein modifiziertes Messsignal zugeführt wird und die derart ausgebildet ist, dass sie in den Leitungen angeordnete Schalter öffnet und so den Umrichter vom Versorgungsnetz trennt, wenn und sobald der Betrag des modifizierten Messsignals während eines durch die Auslegung der Auslöseeinrichtung vorbestimmten Zeitfensters im Mittel einen Auslösegrenzwert übersteigt, und anderenfalls die Schalter geschlossen hält.

Elektrische Anlagen werden zum Personen- und Brandschutz oftmals mit Fehlerstrom-Schutzschaltungen ausgestattet. Derartige Fehlerstrom-Schutzschaltungen werden im deutschsprachigen Raum oftmals als FI-Schutzschalter und im englischsprachigen Raum oftmals als RCCB (residual current operated circuit breaker) bezeichnet. Sie basieren auf dem Prinzip, dass die Gesamtheit der einem geschlossenen Bereich eines Versorgungsnetzes zufließenden Ströme und der zugehörigen abfließenden Ströme sich stets zu 0 ergänzen muss. Es wird daher die Summe der in den Leitungen fließenden Ströme erfasst und mit einem relativ kleinen Auslösegrenzwert von beispielsweise 30 mA oder 300 mA verglichen. Wird der Auslösegrenzwert überschritten, löst die Auslöseeinrichtung aus, so dass die Leitungen unterbrochen werden.

Bei niederfrequent betriebenen Anlagen und Einrichtungen ist die Bedingung, dass die Summe der Ströme sich zu 0 ergänzen muss, bei ordnungsgemäßem Funktionieren der Anlage bzw. Einrichtung stets erfüllt. Bei Anlagen und Einrichtungen, die mit Strömen höherer Frequenz betrieben werden, generieren die Leitungen, in denen Ströme mit diesen höheren Frequenzen fließen, aufgrund ihrer kapazitiven Kopplung mit der Umgebung jedoch Ableitströme, welche über einen Erd- oder Masse-Rückschluss fließen. Ein Beispiel einer derartigen Anlage oder Einrichtung, die mit Strömen mit höheren Frequenzen betrieben wird, ist ein Umrichter, der einen Antrieb oder eine andere Last speist.

Durch die kapazitive Kopplung und die zugehörigen Ableitströme ergibt sich der Effekt, dass sich die Summe der in den Leitungen fließenden Ströme sich nicht mehr zu 0 ergänzt, obwohl kein Fehlerfall vorliegt. Die Fehlerstrom-Schutzschaltung kann jedoch nicht ohne weiteres "erkennen", dass nur ordnungsgemäße Ableitströme fließen.

In der Praxis bedeutet dies, dass Anlagen und Einrichtungen, die mit Strömen höherer Frequenz betrieben werden, nicht ohne weiteres mittels einer Fehlerstrom-Schutzschaltung geschützt werden können.

Aus der EP 2 568 557 A1 sind ein Betriebsverfahren für eine Fehlerstrom-Schutzschaltung der eingangs genannten Art und die zugehörige Fehlerstrom-Schutzschaltung bekannt. Bei der EP 2 568 557 A1 werden der Fehlerstrom-Schutzschaltung von einer Steuereinrichtung des Umrichters Informationen über Schaltvorgänge des Umrichters zugeführt, insbesondere Informationen über die Schaltzeitpunkte, zu denen der Umrichter umgeschaltet wird. Die Fehlerstrom-Schutzschaltung ist dadurch in der Lage, eine Abweichung der Summe der in den Leitungen fließenden Ströme, die zu Schaltzeitpunkten des Umrichters auftritt, zu ignorieren. Eine Abweichung der Summe der in den Leitungen fließenden Ströme, die zu anderen Zeitpunkten auftritt, wird von der Fehlerstrom-Schutzschaltung hingegen nicht ignoriert. Eine derartige Abweichung kann - im Gegensatz zu einer Abweichung zu einem Schaltzeitpunkt des Umrichters - nur auf einen Fehler in der betriebenen Anlage oder Einrichtung zurückzuführen sein.

Die Vorgehensweise der EP 2 568 557 A1 ermöglicht zwar einen Betrieb der Fehlerstrom-Schutzschaltung zusammen mit dem Umrichter. Sie erfordert aber einen hohen Aufwand. Insbesondere ist eine leistungsfähige Kommunikation zwischen der Steuereinrichtung des Umrichters und der Fehlerstrom-Schutzschaltung erforderlich.

Aus der EP 3 300 202 A1 sind ebenfalls ein Betriebsverfahren für eine Fehlerstrom-Schutzschaltung der eingangs genannten Art und die zugehörige Fehlerstrom-Schutzschaltung bekannt. Bei der EP 3 300 202 A1 wird in einer komplexen Folge von aufeinanderfolgenden Verfahrensschritten erkannt, ob in dem Fall, dass die Summe der in den Leitungen fließenden Ströme einen von Null verschiedenen Wert aufweist, diese Abweichung durch einen Ableitstrom oder durch einen Fehlerstrom bewirkt wird. Auch bei der EP 3 300 202 A1 ist eine leistungsfähige Kommunikation zwischen der Steuereinrichtung des Umrichters und der Fehlerstrom-Schutzschaltung erforderlich.

Die Aufgabe der vorliegenden Erfindung besteht darin, Möglichkeiten zu schaffen, aufgrund derer die Fehlerstrom-Schutzschaltung auch bei einem Verbraucher verwendet werden kann, der einen Umrichter aufweist, ohne dass eine Kommunikation zwischen der Steuereinrichtung des Umrichters und der Fehlerstrom-Schutzschaltung erforderlich ist.

Die Aufgabe wird durch ein Betriebsverfahren mit den Merkmalen des Anspruchs 1 gelöst. Eine vorteilhafte Ausgestaltung des Betriebsverfahrens ist Gegenstand des abhängigen Anspruchs 2.

Erfindungsgemäß wird ein Betriebsverfahren der eingangs genannten Art dadurch ausgestaltet,
- dass die Sensoreinrichtung das Messsignal einer Begrenzungseinrichtung der Fehlerstrom-Schutzschaltung zuführt, die Begrenzungseinrichtung das modifizierte Messsignal ermittelt und die Begrenzungseinrichtung das modifizierte Messsignal der Auslöseeinrichtung zuführt und
- dass die Begrenzungseinrichtung das modifizierte Messsignal derart ermittelt,
   -- dass das modifizierte Messsignal mit dem Messsignal oder dem Betrag des Messsignals übereinstimmt, wenn und solange der Betrag des Messsignals unterhalb eines vorbestimmten Maximalwerts liegt, und anderenfalls der Betrag des modifizierten Messsignals auf den Maximalwert begrenzt wird, und/oder
   -- dass eine Änderungsgeschwindigkeit des modifizierten Messsignals mit einer Änderungsgeschwindigkeit des Messsignals übereinstimmt, wenn und solange der Betrag der Änderungsgeschwindigkeit des Messsignals unterhalb eines vorbestimmten Änderungsgrenzwertes liegt, und anderenfalls der Betrag der Änderungsgeschwindigkeit des modifizierten Messsignals auf den Änderungsgrenzwert begrenzt wird.

Die erfindungsgemäße Lehre beruht auf der Erkenntnis, dass die Kurvenform eines Ableitstroms sich von der Kurvenform eines Fehlerstroms unterscheidet. Insbesondere tritt ein Ableitstrom nur bei einem Schaltvorgang des Umrichters auf, wenn sich also der Schaltzustand des Umrichters ändert. Der Ableitstrom liegt in Form einer kurzen Stromspitze vor. Während derjenigen Zeiten, während derer der Schaltzustand sich nicht ändert, tritt kein Ableitstrom auf. Ein Fehlerstrom hingegen wird nicht durch eine Änderung des Schaltzustands des Umrichters als solche verursacht, sondern durch den Fehler in Verbindung mit dem Schaltzustand als solchem. Er fließt während des gesamten jeweiligen Schaltzustands.

Dadurch, dass das modifizierte Messsignal gegenüber dem Messsignal auf den Maximalwert begrenzt wird, kann in Verbindung mit dem Umstand, dass der Ableitstrom nur beim Umschaltvorgang als solchem auftritt und während der übrigen Zeit 0 ist, erreicht werden, dass im Falle eines Ableitstroms der Auslösegrenzwert zwar kurzzeitig - nämlich beim Umschalten - überschritten wird, der relevante Mittelwert (gemittelt über das vorbestimmte Zeitfenster) hingegen unter dem Auslösegrenzwert bleibt. Die Auslöseeinrichtung löst daher nicht aus. Im Falle eines Fehlerstroms liegt der Betrag des Fehlerstroms hingegen im wesentlichen während des gesamten Zeitraums zwischen zwei Schaltvorgängen oberhalb des Auslösegrenzwerts. Damit liegt im Fehlerfall auch der relevante Mittelwert (gemittelt über das vorbestimmte Zeitfenster) über dem Auslösegrenzwert. Die Auslöseeinrichtung löst daher aus.

Eine ähnliche Wirkung ergibt sich in dem Fall, dass die Änderungsgeschwindigkeit des modifizierten Messsignals gegenüber der Änderungsgeschwindigkeit des Messsignals begrenzt wird. Aufgrund des Umstands, dass der Ableitstrom nur beim Umschaltvorgang als solchem auftritt und während der übrigen Zeit 0 ist, steigt im Falle eines Ableitstroms das modifizierte Messsignal beim Umschalten geringfügig an und sinkt danach wieder auf Null ab. Der relevante Mittelwert des modifizierten Messsignals (gemittelt über das vorbestimmte Zeitfenster) bleibt daher klein und liegt unter dem Auslösegrenzwert. Die Auslöseeinrichtung löst daher nicht aus.

Im Falle eines Fehlerstroms hingegen kann das modifizierte Messsignal während des Zeitraums, in dem der Schaltzustand des Umrichters beibehalten wird, immer weiter ansteigen bzw. zumindest den von Null verschiedenen Wert beibehalten, so dass das modifizierte Messsignal dauerhaft einen nennenswerten Wert annehmen kann. Damit liegt im Fehlerfall auch der relevante Mittelwert des modifizierten Messsignals (gemittelt über das vorbestimmte Zeitfenster) über dem Auslösegrenzwert. Die Auslöseeinrichtung löst daher aus.

Die beiden Begrenzungen - die des Messsignals und die der Änderung des Messsignals - können unabhängig voneinander realisiert werden. Sie können aber auch zusammen realisiert werden.

Vorzugsweise liegt der Maximalwert zwischen dem 2-fachen und dem 20-fachen des Auslösegrenzwerts und/oder ist der Änderungsgrenzwert mindestens zehnmal und maximal 100 mal so groß wie der Quotient des Auslösegrenzwerts und des Zeitfensters. Dadurch ergibt sich zum einen eine zuverlässige Auslösung im Fehlerfall und werden zum anderen Fehlauslösungen durch Ableitströme vermieden.

Die Aufgabe wird weiterhin durch eine Fehlerstrom-Schutzschaltung mit den Merkmalen des Anspruchs 3 gelöst. Eine vorteilhafte Ausgestaltung der Fehlerstrom-Schutzschaltung ist Gegenstand des abhängigen Anspruchs 4.

Erfindungsgemäß wird eine Fehlerstrom-Schutzschaltung der eingangs genannten Art dadurch ausgestaltet,
- dass die Fehlerstrom-Schutzschaltung eine Begrenzungseinrichtung aufweist, die zum Entgegennehmen des Messsignals mit der Sensoreinrichtung und zum Zuführen des modifizierten Messsignals mit der Auslöseeinrichtung verbunden ist, und
- dass die Begrenzungseinrichtung derart ausgebildet ist, dass sie das modifizierte Messsignal derart ermittelt,
   -- dass das modifizierte Messsignal mit dem Messsignal oder dem Betrag des Messsignals übereinstimmt, wenn und solange der Betrag des Messsignals unterhalb eines vorbestimmten Maximalwerts liegt, und anderenfalls der Betrag des modifizierten Messsignals auf den Maximalwert begrenzt wird, und/oder
   -- dass eine Änderungsgeschwindigkeit des modifizierten Messsignals mit einer Änderungsgeschwindigkeit des Messsignals übereinstimmt, wenn und solange der Betrag der Änderungsgeschwindigkeit des Messsignals unterhalb eines vorbestimmten Änderungsgrenzwertes liegt, und anderenfalls der Betrag der Änderungsgeschwindigkeit des modifizierten Messsignals auf den Änderungsgrenzwert begrenzt wird.

Die sich ergebenden Wirkungen korrespondieren mit denen des Betriebsverfahrens.

Die vorteilhafte Ausgestaltung der Fehlerstrom-Schutzschaltung korrespondiert ebenfalls mit der des Betriebsverfahrens. Das gleiche gilt für den sich ergebenden Vorteil.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Schaltungsanordnung,
- FIG 2: ein Zeitdiagramm,
- FIG 3: eine Fehlerstrom-Schutzschaltung,
- FIG 4: ein Zeitdiagramm,
- FIG 5: ein Zeitdiagramm,
- FIG 6: eine Fehlerstrom-Schutzschaltung,
- FIG 7: ein Zeitdiagramm,
- FIG 8: ein Zeitdiagramm und
- FIG 9: eine Fehlerstrom-Schutzschaltung.

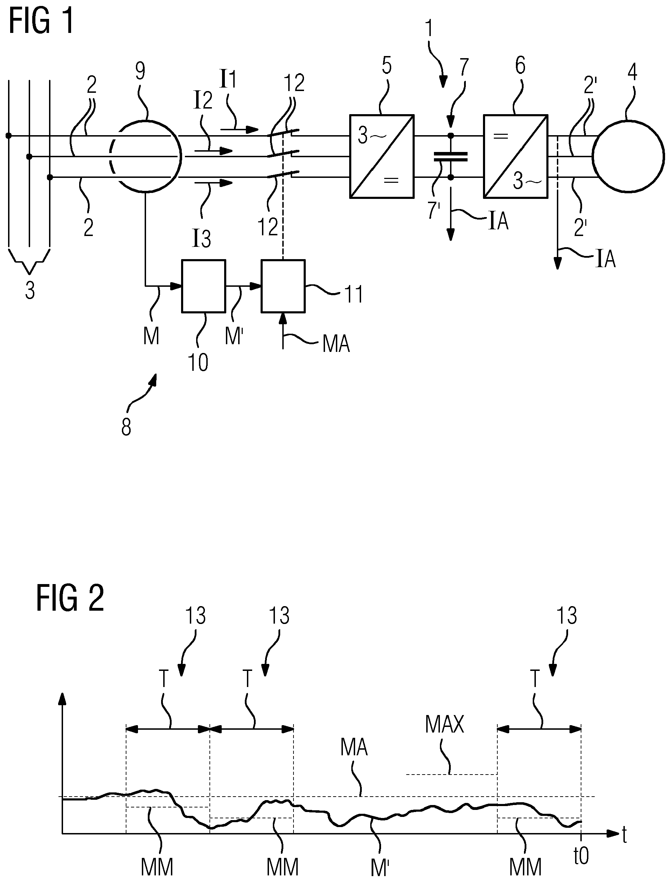

Gemäß FIG 1 ist ein Umrichter 1 über netzseitige Leitungen 2 mit einem Versorgungsnetz 3 verbunden. In der Regel ist das Versorgungsnetz 3 mehrphasig. In diesem Fall liegt die Anzahl an Phasen entsprechend der Darstellung in FIG 1 in der Regel bei drei. Es ist jedoch auch möglich, dass bei einem mehrphasigen Versorgungsnetz die Anzahl an Phasen einen anderen Wert aufweist oder dass das Versorgungsnetz 3 nur einphasig ist. Der Umrichter 1 versorgt über lastseitige Leitungen 2' eine Last 4. Die Last 4 kann beispielsweise ein elektrischer Antrieb sein. Der Umrichter 1 ist entsprechend der Darstellung in FIG 1 als Zwischenkreisumrichter ausgebildet, der eingangsseitig einen Gleichrichter 5, ausgangsseitig einen Wechselrichter 6 und dazwischen einen Zwischenkreis 7 mit Zwischenkreiskondensator 7' aufweist. Der Umrichter 1 könnte aber auch als Direktumrichter ausgebildet sein.

Die netzseitigen Leitungen 2 sind über eine Fehlerstrom-Schutzschaltung 8 geführt. Die Fehlerstrom-Schutzschaltung 8 ist somit zwischen dem Versorgungsnetz 3 und dem Umrichter 1 angeordnet. Die Fehlerstrom-Schutzschaltung 8 weist eine Sensoreinrichtung 9, eine Begrenzungsschaltung 10, eine Auslöseeinrichtung 11 sowie Schalter 12 auf. Mittels der Schalter 12 kann der Umrichter 1 galvanisch vom Versorgungsnetz 3 getrennt werden. Die Schalter 12 sind im Normalbetrieb geschlossen, so dass also die elektrische Verbindung zwischen dem Versorgungsnetz 3 und dem Umrichter 1 besteht.

Mittels der Sensoreinrichtung 9 erfasst die Fehlerstrom-Schutzschaltung 8 ein Messsignal M. Das Messsignal M korrespondiert mit der Summe der Ströme I1, I2, I3, welche durch die netzseitigen Leitungen 2 fließen. Alternativ kann das Messsignal M mit dem Betrag dieser Summe korrespondieren. Die Ströme I1, I2, 13 werden im Rahmen der Summe vorzeichenrichtig berücksichtigt. Wenn beispielsweise der Strom I1 mit 2A zum Umrichter 1 hin fließt, der Strom I2 mit 3A zum Umrichter 1 hin fließt und der Strom I3 mit 4A vom Umrichter 1 weg fließt, so korrespondiert das Messsignal M mit 2A+3A-4A = 1A. Wenn umgekehrt beispielsweise der Strom I1 mit 2A vom Umrichter 1 weg fließt, der Strom I2 mit 3A vom Umrichter 1 weg fließt und der Strom I3 mit 4A zum Umrichter 1 hin fließt, so korrespondiert das Messsignal M mit -2A-3A+4A = -1A oder, sofern das Messsignal M den Betrag der Summe entspricht, mit +1A. Diese Art und Weise der Erfassung des Messsignals M ist Fachleuten allgemein bekannt.

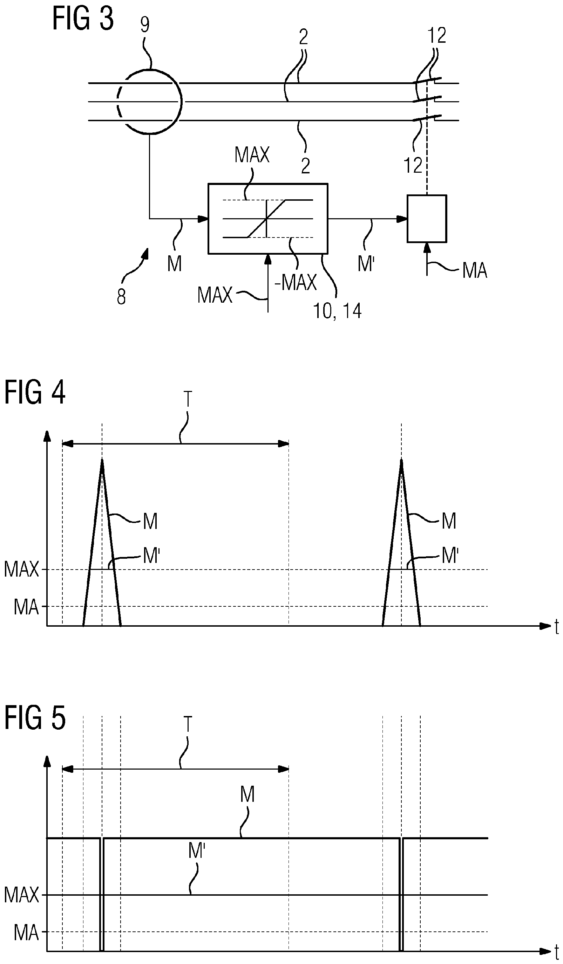

Der Auslöseeinrichtung 11 nimmt ein modifiziertes Messsignal M' entgegen, das anhand des Messsignals M ermittelt wird. FIG 2 zeigt beispielhaft ein modifiziertes Messsignal M' als Funktion der Zeit t. In FIG 2 und den übrigen Zeitdiagrammen (Figur 4, 5, 7 und 8) ist jeweils nur der Fall dargestellt, dass das Messsignal M und das modifizierte Messsignal M' größer als 0 sind. Dies ist ausreichend, weil es für relevante Sachverhalte stets auf den Betrag des Messsignals M und des modifizierten Messsignals M' ankommt, so dass der Fall, dass das Messsignal M und das modifizierte Messsignal M' kleiner als 0 sind, völlig analog zu behandeln ist.

Die Auslöseeinrichtung 11 ermittelt entsprechend der Darstellung in FIG 2 während eines jeweiligen Zeitfensters 13 den Mittelwert MM des Betrags des modifizierten Messsignals M'. Es ist entsprechend der Darstellung links in FIG 2 möglich, dass die Zeitfenster 13 disjunkt sind, dass also zuerst ein Zeitfenster 13 abgeschlossen sein muss, bevor das nächste Zeitfenster 13 beginnt. In der Regel wird jedoch entsprechend der Darstellung rechts in FIG 2 das Zeitfenster 13 als Zeitfenster ausgebildet, das sich vom jeweils augenblicklichen Zeitpunkt t0 um eine Zeitspanne T in die Vergangenheit erstreckt. Die Zeitspanne T, das heißt die Länge des Zeitfensters 13, liegt in der Regel im Bereich einiger Millisekunden. Es kann eine reine Mittelwertbildung erfolgen. Alternativ kann die Mittelwertbildung durch ein geeignetes Filter, beispielsweise ein Verzögerungsglied erster Ordnung (PT1-Glied), vorgenommen werden. In diesem Fall ist die Zeitspanne T durch die sogenannte Eckfrequenz des Filters vorgegeben.

Die Zeitspanne T kann unabhängig vom Ausmaß sein, um welches der Auslösegrenzwert MA überschritten wird. Oftmals ist sie jedoch von diesem Ausmaß abhängig, insbesondere umso kleiner, je größer die Überschreitung ist. In jedem Fall aber ist die Größe der Zeitspanne T durch die Auslegung der Auslöseschaltung 11 vorbestimmt. Die Auslöseeinrichtung 10 hält die Schalter 12 geschlossen, wenn und solange der Mittelwert MM einen Auslösegrenzwert MA von beispielsweise 30 mA oder 300 mA nicht übersteigt. Wenn und sobald der Mittelwert MM den Auslösegrenzwert MA jedoch übersteigt, so öffnet die Auslöseeinrichtung 11 die Schalter 12 und trennt dadurch den Umrichter 1 vom Versorgungsnetz 3. Danach, also nach dem Öffnen der Schalter 12, können die Schalter 12 in der Regel nur durch eine manuell-mechanische Betätigung durch einen Menschen wieder geschlossen werden. Diese Art und Weise der Wirkungsweise der Auslöseeinrichtung 11 bzw. der Fehlerstrom-Schutzschaltung 8 insgesamt ist Fachleuten ebenfalls allgemein bekannt.

Die Ermittlung des modifizierten Messsignals M' erfolgt durch die Begrenzungseinrichtung 10. Die Begrenzungseinrichtung 10 nimmt daher von der Sensoreinrichtung 9 das Messsignal M entgegen und führt das modifizierte Messsignal M' der Auslöseeinrichtung 11 zu. Die Begrenzungseinrichtung 10, deren Ausgestaltung und deren Wirkungsweise sind der Kern der vorliegenden Erfindung. Sie werden nachfolgend in Verbindung mit den FIG 1 und 2 und den weiteren FIG erläutert.

In einer möglichen Ausgestaltung der Begrenzungseinrichtung 10 ermittelt die Begrenzungseinrichtung 10 das modifizierte Messsignal M' derart, dass das modifizierte Messsignal M' mit dem Messsignal M oder dem Betrag des Messsignals M übereinstimmt, wenn und solange der Betrag des Messsignals M unterhalb eines vorbestimmten Maximalwerts MAX liegt. Anderenfalls begrenzt sie das modifizierte Messsignal M' auf den Maximalwert MAX.

Der Maximalwert MAX muss entsprechend der Darstellung in FIG 2 oberhalb des Auslösegrenzwerts MA liegen. Denn anderenfalls würde die Auslöseeinrichtung 11 die Schalter 12 niemals öffnen. Andererseits liegt der Maximalwert MAX unterhalb eines messtechnisch maximal möglichen Wertes. Es kann also durch die Begrenzungseinrichtung 10 eine tatsächliche Begrenzung des modifizierten Messsignals M' gegenüber dem Messsignal M erfolgen. In der Praxis liegt der Maximalwert MAX in der Regel zwischen dem 2-fachen und dem 20-fachen des Auslösegrenzwerts MA, beispielsweise zwischen dem 3-fachen und dem 8-fachen des Auslösegrenzwerts MA.

Im Falle der Begrenzung auf den Maximalwert MAX kann die Begrenzungseinrichtung 10 beispielsweise entsprechend der Darstellung in FIG 3 einen Begrenzer 14 aufweisen, der die Begrenzung des Messsignals M vornimmt und so das modifizierte Messsignal M' ermittelt.

Die Begrenzung des Betrags des modifizierten Messsignals M' auf den Maximalwert MAX beruht auf dem Gedanken, dass der Umrichter 1 zwar zu bestimmten Zeitpunkten - nachfolgend als Schaltzeitpunkte bezeichnet - seinen Schaltzustand wechselt, zwischen den Schaltzeitpunkten seinen Schaltzustand jedoch beibehält. Beispielsweise kann der Umrichter 1 pulsweitenmoduliert betrieben werden. Das Wechseln des Schaltzustands bewirkt entsprechend der Darstellung in FIG 1 einen sogenannten Ableitstrom IA, der über eine unvermeidbare kapazitive Kopplung des Umrichters 1 und/oder der lastseitigen Leitungen 2' vom Umrichter 1 zur Last 4 und/oder der Last 4 zu Masse oder Erde fließt. Dies gilt, obwohl keine elektrische Fehlfunktion vorliegt. Dadurch ist die Bedingung, dass die Summe der mittels der Sensoreinrichtung 9 erfassten Ströme I1, I2, I3 den Wert 0 aufweist, nicht mehr erfüllt. Das Messsignal M bzw. dessen Betrag nimmt somit entsprechend der Darstellung in FIG 4 einen von Null verschiedenen Wert an.

Der Ableitstrom IA tritt jedoch nur sehr kurzzeitig während des jeweiligen Schaltzeitpunkts auf. Er steigt also zwar sehr schnell auf einen relativ hohen Wert an, fällt danach jedoch ebenso schnell wieder auf Null ab. Gleiches gilt für das Messsignal M. Durch die Begrenzung des modifizierten Messsignals M' auf den Maximalwert MAX in Verbindung mit dem Umstand, dass das Zeitfenster 13 erheblich größer als der Zeitraum ist, während dessen das Messsignal M aufgrund des Ableitstroms IA einen von Null verschiedenen Wert aufweist, liegt der Mittelwert MM des modifizierten Messsignals M' trotz der durch den Ableitstrom IA bewirkten Verschiedenheit des Messsignals M von 0 unterhalb des Auslösegrenzwerts MA. Eine fehlerhafte Auslösung der Fehlerstrom-Schutzschaltung 8 aufgrund eines Ableitstroms IA wird somit vermieden.

Hierzu ein Zahlenbeispiel: Man nehme an, der Maximalwert MAX betrage das dreifache des Auslösegrenzwerts MA. Die Dauer, während dessen das Messsignal M aufgrund des Ableitstroms IA einen von Null verschiedenen Wert aufweist, liege bei 5 % der Zeitspanne T. Dann ist der sich ergebende Mittelwert MM kleiner als 3 x MA x 0,05 = 0,15 MA und damit kleiner als der Auslösegrenzwert MA.

Wenn hingegen entsprechend der Darstellung in FIG 5 ein Masseschluss oder ein Erdschluss auftritt, fließt der Fehlerstrom während der gesamten Zeitspanne zwischen zwei aufeinanderfolgenden Schaltzeiten. Die hierdurch bewirkte Abweichung der Summe der Ströme I1, I2, I3 von 0 kann zwar ebenfalls ein Messsignal M hervorrufen, das größer als der Maximalwert MAX ist, so dass auch in diesem Fall der Betrag des modifizierten Messsignals M' auf den Maximalwert MAX begrenzt wird. Da das Messsignal M jedoch mit Ausnahme der sehr kurzen Schaltzeitpunkte permanent von 0 verschieden ist, gilt dies auch für das modifizierte Messsignal M'. Trotz der Begrenzung auf den Maximalwert MAX kann der Mittelwert MM des Betrags des modifizierten Messsignals M' somit ohne weiteres oberhalb des Auslösegrenzwerts MA liegen. Eine ordnungsgemäße Auslösung der Fehlerstrom-Schutzschaltung 8 aufgrund eines Fehlerstroms wird somit zuverlässig gewährleistet.

In einer möglichen alternativen Ausgestaltung der Begrenzungseinrichtung 10 ermittelt die Begrenzungseinrichtung 10 das modifizierte Messsignal M' derart, dass eine Änderungsgeschwindigkeit δM' des modifizierten Messsignals M' mit einer Änderungsgeschwindigkeit δM des Messsignals M übereinstimmt, wenn und solange der Betrag der Änderungsgeschwindigkeit δM des Messsignals M unterhalb eines vorbestimmten Änderungsgrenzwertes δMAX liegt. Anderenfalls begrenzt sie den Betrag der Änderungsgeschwindigkeit δM' des modifizierten Messsignals M' auf den Änderungsgrenzwert δMAX. Der Änderungsgrenzwert δMAX kann nach Bedarf bestimmt sein. In der Praxis ist der Änderungsgrenzwert δMAX meist mindestens zehnmal und maximal 100 mal so groß wie der Quotient des Auslösegrenzwerts MA und der Zeitspanne T des Zeitfensters 13.

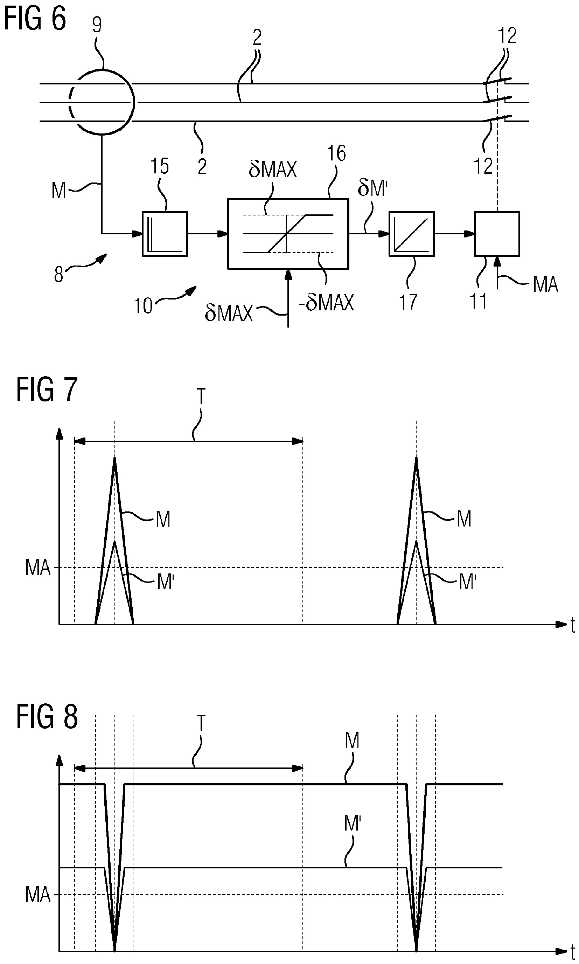

Im Falle der Begrenzung des Betrags der Änderungsgeschwindigkeit δM' des modifizierten Messsignals M' auf den Änderungsgrenzwert δMAX kann die Begrenzungseinrichtung 10 beispielsweise entsprechend der Darstellung in FIG 6 einen Differenzierer 15, einen Begrenzer 16 und einen Integrierer 17 aufweisen. Der Differenzierer 15 differenziert das Messsignal M, so dass an seinem Ausgang die zeitliche Ableitung und damit die Änderungsgeschwindigkeit δM des Messsignals M ausgegeben wird. Die Änderungsgeschwindigkeit δM des Messsignals M wird dem Begrenzer 16 zugeführt, der eine entsprechende Begrenzung vornimmt und an seinem Ausgang die Änderungsgeschwindigkeit δM' des modifizierten Messsignals M' zur Verfügung stellt. Der Integrierer 17 nimmt sodann eine zeitliche Integration der Änderungsgeschwindigkeit δM' des modifizierten Messsignals M' vor und stellt dadurch an seinem Ausgang das modifizierte Messsignal M' zur Verfügung. Das modifizierte Messsignal M' wird der Auslöseeinrichtung 11 zugeführt.

Die Begrenzungseinrichtung 10 gemäß FIG 6 kann kontinuierlich oder getaktet betrieben werden. In einer alternativen Ausgestaltung, die in der Praxis zu einem stabileren Betrieb führt, wird ein getakteter Betrieb der Begrenzungseinrichtung 10 vorausgesetzt. In diesem Fall wird bei jedem Arbeitstakt das im vorherigen Arbeitstakt ermittelte modifizierte Messsignal M' von dem Messsignal M des jeweiligen Arbeitstakt subtrahiert. Diese Differenz wird begrenzt. Das modifizierte Messsignal M' des jeweiligen Arbeitstakt ergibt sich sodann als Summe des modifizierten Messsignals M' des vorherigen Arbeitstaktes und dem Wert, der sich nach der Begrenzung der verstärkten Differenz ergibt.

Die Begrenzung des Betrags der Änderungsgeschwindigkeit δM' des modifizierten Messsignals M' auf den Änderungsgrenzwert δMAX beruht auf dem Gedanken, dass die durch den Ableitstrom IA hervorgerufene Änderung sehr kurz und sehr stark ist, so dass auch die hierdurch hervorgerufene Änderung des Messsignals M entsprechend kurz und stark ist. Im Ergebnis wird durch diese Begrenzung entsprechend der Darstellung in FIG 7 auch die Höhe des modifizierten Messsignals M' beschränkt. Es ergeben sich somit für einen Ableitstrom IA ähnliche Wirkungen wie bei einer direkten Begrenzung des modifizierten Messsignals M' selbst. Eine fehlerhafte Auslösung der Fehlerstrom-Schutzschaltung 8 aufgrund eines Ableitstroms IA wird somit vermieden.

Wenn hingegen entsprechend der Darstellung in FIG 8 ein Masseschluss oder ein Erdschluss auftritt, fließt der Fehlerstrom während der gesamten Zeitspanne zwischen zwei aufeinanderfolgenden Schaltzeiten. Auch in diesem Fall wird der Betrag der Änderungsgeschwindigkeit δM' des modifizierten Messsignals M' zwar begrenzt, so dass auch das modifizierte Messsignal M' relativ niedrig bleibt. Der entsprechend begrenzte Wert des modifizierten Messsignals M' bleibt jedoch bis zum nächsten Schaltzeitpunkt erhalten. Bei geeigneter Bestimmung des Änderungsgrenzwertes δMAX kann daher ohne weiteres gewährleistet werden, dass der Mittelwert MM des Betrags des modifizierten Messsignals M' oberhalb des Auslösegrenzwerts MA liegt. Eine ordnungsgemäße Auslösung der Fehlerstrom-Schutzschaltung 8 aufgrund eines Fehlerstroms wird somit auch in dieser Ausgestaltung zuverlässig gewährleistet.

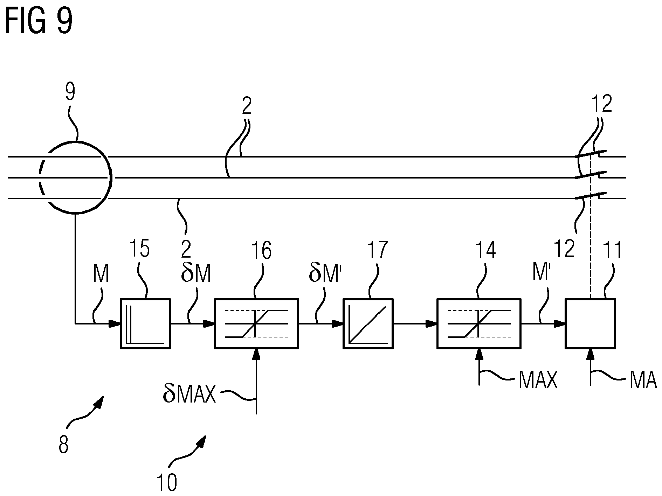

Die Ausgestaltungen der FIG 3 und 6 können auch miteinander kombiniert werden. Ein Beispiel einer derartigen Kombination ist in FIG 9 dargestellt. Die in FIG 9 verwendeten Bezugszeichen korrespondieren mit denen von FIG 3 und FIG 6, so dass die Funktion und Wirkungsweise der Fehlerstrom-Schutzschaltung 8 von FIG 9 ohne weiteres ersichtlich ist.

Zusammengefasst betrifft die vorliegende Erfindung somit folgenden Sachverhalt:
Eine Sensoreinrichtung 9 erfasst ein Messsignal M, das mit der Summe der Ströme I1, I2, I3 korrespondiert, die durch Leitungen 2 fließen, über welche ein Umrichter 1 mit einem Versorgungsnetz 3 verbunden ist. Eine Begrenzungseinrichtung 10 ermittelt anhand des Messsignals M ein modifiziertes Messsignal M' und führt es einer Auslöseeinrichtung 11 zu. Die Auslöseeinrichtung 11 öffnet in den Leitungen 2 angeordnete Schalter 12 und trennt so den Umrichter 1 vom Versorgungsnetz 3, wenn und sobald der Betrag des modifizierten Messsignals M' während eines durch die Auslegung der Auslöseeinrichtung 11 vorbestimmten Zeitfensters 13 im Mittel einen Auslösegrenzwert MA übersteigt. Anderenfalls hält sie die Schalter 12 geschlossen. Die Begrenzungseinrichtung 10 ermittelt das modifizierte Messsignal M' derart, dass es mit dem Messsignal M oder dessen Betrag übereinstimmt, wenn und solange der Betrag des Messsignals M unterhalb eines vorbestimmten Maximalwerts MAX liegt. Anderenfalls begrenzt sie den Betrag des modifizierten Messsignals M' auf den Maximalwert MAX. Alternativ oder zusätzlich ermittelt sie das modifizierte Messsignal M' derart, dass dessen Änderungsgeschwindigkeit δM' mit einer Änderungsgeschwindigkeit δM des Messsignals M übereinstimmt, wenn und solange der Betrag der Änderungsgeschwindigkeit δM des Messsignals M unterhalb eines vorbestimmten Änderungsgrenzwertes δMAX liegt. Anderenfalls begrenzt sie den Betrag der Änderungsgeschwindigkeit δM' des modifizierten Messsignals M' auf den Änderungsgrenzwert δMAX.

Die vorliegende Erfindung weist viele Vorteile auf. Insbesondere kann mittels der erfindungsgemäßen Fehlerstrom-Schutzschaltung 8 zum einen ein zuverlässiger Schutz vor Fehlerströmen auch bei Anlagen mit Umrichtern 1 gewährleistet werden. Dennoch werden fehlerhafte Auslösungen aufgrund von Ableitströmen IA wirksam vermieden. Die Erfindung ist auch bei einer Fehlerstrom-Schutzschaltung 8 vom Typ B oder B+ einsetzbar, welche auf ein Messsignal M bzw. ein modifiziertes Messsignal M' mit einem Frequenzanteil bis 2 kHz bzw. bis 20 kHz reagieren können. Eine steuerungstechnische Verbindung und Kommunikation der Fehlerstrom-Schutzschaltung 8 und der Steuereinrichtung des Umrichters 1 ist nicht erforderlich. Die im Stand der Technik übliche Auswertung des Messsignals M (bzw. hier des modifizierten Messsignals M') kann als solche unverändert beibehalten werden. Die Fehlerstrom-Schutzschaltung 8 der vorliegenden Erfindung ist einfach realisierbar und sehr kostengünstig.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Fehlerstrom-Schutzschaltung (8),
- wobei die Fehlerstrom-Schutzschaltung mittels einer Sensoreinrichtung (9) ein Messsignal (M) erfasst, das mit der Summe der Ströme (I1, I2, I3) korrespondiert, die durch Leitungen (2) fließen, über welche ein der Fehlerstrom-Schutzschaltung (8) nachgeordneter Umrichter (1) mit einem Versorgungsnetz (3) verbunden ist,
- wobei die Fehlerstrom-Schutzschaltung (8) anhand des Messsignals (M) ein modifiziertes Messsignal (M') ermittelt und das modifizierte Messsignal (M') einer Auslöseeinrichtung (11) der Fehlerstrom-Schutzschaltung (8) zuführt,
- wobei die Auslöseeinrichtung (11) in den Leitungen (2) angeordnete Schalter (12) öffnet und so den Umrichter (1) vom Versorgungsnetz (3) trennt, wenn und sobald der Betrag des modifizierten Messsignals (M') während eines durch die Auslegung der Auslöseeinrichtung (11) vorbestimmten Zeitfensters (13) im Mittel einen Auslösegrenzwert (MA) übersteigt, und anderenfalls die Schalter (12) geschlossen hält,
**dadurch gekennzeichnet,**
- **dass** die Sensoreinrichtung (9) das Messsignal (M) einer Begrenzungseinrichtung (10) der Fehlerstrom-Schutzschaltung (8) zuführt, die Begrenzungseinrichtung (10) das modifizierte Messsignal (M') ermittelt und die Begrenzungseinrichtung (10) das modifizierte Messsignal (M') der Auslöseeinrichtung (11) zuführt, und
- **dass** die Begrenzungseinrichtung (10) das modifizierte Messsignal (M') derart ermittelt,
-- dass das modifizierte Messsignal (M') mit dem Messsignal (M) oder dem Betrag des Messsignals (M) übereinstimmt, wenn und solange der Betrag des Messsignals (M) unterhalb eines vorbestimmten Maximalwerts (MAX) liegt, und anderenfalls der Betrag des modifizierten Messsignals (M') auf den Maximalwert (MAX) begrenzt wird, und/oder
-- dass eine Änderungsgeschwindigkeit (δM') des modifizierten Messsignals (M') mit einer Änderungsgeschwindigkeit (δM) des Messsignals (M) übereinstimmt, wenn und solange der Betrag der Änderungsgeschwindigkeit (δM) des Messsignals (M) unterhalb eines vorbestimmten Änderungsgrenzwertes (δMAX) liegt, und anderenfalls der Betrag der Änderungsgeschwindigkeit (δM') des modifizierten Messsignals (M') auf den Änderungsgrenzwert (δMAX) begrenzt wird.

2. Betriebsverfahren nach Anspruch 1,
**dadurch gekennzeichnet,**
**dass** der Maximalwert (MAX) zwischen dem 2-fachen und dem 20-fachen des Auslösegrenzwerts (MA) liegt und/oder der Änderungsgrenzwert (δMAX) mindestens zehnmal und maximal 100 mal so groß wie der Quotient des Auslösegrenzwerts (MA) und des Zeitfensters (13) ist.

3. Fehlerstrom-Schutzschaltung,
- wobei die Fehlerstrom-Schutzschaltung eine Sensoreinrichtung (9) aufweist, mittels derer die Fehlerstrom-Schutzschaltung ein Messsignal (M) erfasst, das mit der Summe der Ströme (I1, I2, I3) korrespondiert, die durch Leitungen (2) fließen, über welche ein der Fehlerstrom-Schutzschaltung nachgeordneter Umrichter (1) mit einem Versorgungsnetz (3) verbunden ist,
- wobei die Fehlerstrom-Schutzschaltung eine Auslöseeinrichtung (11) aufweist, der ein modifiziertes Messsignal (M') zugeführt wird und die derart ausgebildet ist, dass sie in den Leitungen (2) angeordnete Schalter (12) öffnet und so den Umrichter (1) vom Versorgungsnetz (3) trennt, wenn und sobald der Betrag des modifizierten Messsignals (M') während eines durch die Auslegung der Auslöseeinrichtung (11) vorbestimmten Zeitfensters (13) im Mittel einen Auslösegrenzwert (MA) übersteigt, und anderenfalls die Schalter (12) geschlossen hält,
**dadurch gekennzeichnet,**
- **dass** die Fehlerstrom-Schutzschaltung eine Begrenzungseinrichtung (10) aufweist, die zum Entgegennehmen des Messsignals (M) mit der Sensoreinrichtung (9) und zum Zuführen des modifizierten Messsignals (M') mit der Auslöseeinrichtung (11) verbunden ist, und
- **dass** die Begrenzungseinrichtung (10) derart ausgebildet ist, dass sie das modifizierte Messsignal (M') derart ermittelt,
-- dass das modifizierte Messsignal (M') mit dem Messsignal (M) oder dem Betrag des Messsignals (M) übereinstimmt, wenn und solange der Betrag des Messsignals (M) unterhalb eines vorbestimmten Maximalwerts (MAX) liegt, und anderenfalls der Betrag des modifizierten Messsignals (M') auf den Maximalwert (MAX) begrenzt wird, und/oder
-- dass eine Änderungsgeschwindigkeit (δM') des modifizierten Messsignals (M') mit einer Änderungsgeschwindigkeit (δM) des Messsignals (M) übereinstimmt, wenn und solange der Betrag der Änderungsgeschwindigkeit (δM) des Messsignals (M) unterhalb eines vorbestimmten Änderungsgrenzwertes (δMAX) liegt, und anderenfalls der Betrag der Änderungsgeschwindigkeit (δM') des modifizierten Messsignals (M') auf den Änderungsgrenzwert (δMAX) begrenzt wird.

4. Fehlerstrom-Schutzschaltung nach Anspruch 3,
**dadurch gekennzeichnet,**
**dass** der Maximalwert (MAX) zwischen dem 2-fachen und dem 20-fachen des Auslösegrenzwerts (MA) liegt und/oder der Änderungsgrenzwert (δMAX) mindestens zehnmal und maximal 100 mal so groß wie der Quotient des Auslösegrenzwerts (MA) und des Zeitfensters (13) ist.
